# EUROPEAN PATENT APPLICATION

(11) **EP 3 560 631 A1**
(43) Date of publication of application: **30.10.2019**
(21) Application number: 16885442.0
(22) Date of filing: 26.12.2016
(51) Int. Cl.: B22F 1/02, B22F 1/00, B22F 3/105, B22F 3/16, B33Y 70/00

(54) **POWDER FOR METAL ADDITIVE MANUFACTURING AND METHOD FOR MANUFACTURING SAME**

(71) Applicant: Technology Research Association for Future Additive Manufacturing, Tokyo 103-0027 (JP)
(72) Inventor: NISHIDA Motonori, Kyoto-shi Kyoto 607-8305 (JP); SUGITANI Yuji, Kyoto-shi Kyoto 607-8305 (JP); CHIBA Akihiko, Sendai-shi Miyagi 980-8577 (JP); DAINO Youhei, Sendai-shi Miyagi 980-8577 (JP)
(74) Representative: TBK
(86) International application number: PCT/JP2016/088768
(87) International publication number: WO 2018/122934

(57) **Abstract**

The present invention relates to a metal powder which shortens a lamination-shaping time and facilitates the removal of an unnecessary powder after lamination-shaping by decreasing a pre-sintering temperature by using a processed metal powder. This metal powder for lamination-shaping is obtained by coating the surface of a powder of a nickel-based alloy with a conductive material. When the powder is the powder of the nickel-based alloy containing nickel as a main component and chromium and iron as primary subcomponents, the powder is coated, e.g., plated with nickel as the conductive material. The particle diameter range of the powder of the nickel-based alloy is 10 to 200 µm, preferably 25 to 150 µm, and more preferably 45 to 105 µm. The thickness range of the conductive material is 0.1 to 1 µm, and preferably 0.3 µm or more.

## Description

### TECHNICAL FIELD

The present invention relates to a metal material used for lamination-shaping.

### BACKGROUND ART

In the abovementioned technical field, patent literature 1 has disclosed a three-dimensional lamination-shaping technique using a metal powder. In patent literature 1, when melting an alloy powder by using an electron beam, preheating is performed in advance at a temperature which is 50% to 80% of the melting point of the alloy. Non-patent literature 1 has disclosed a technique of manufacturing a three-dimensional shaped object by controlling the intensity and frequency of an electron beam for melting a metal powder.

### CITATION LIST

### PATENT LITERATURE

Patent literature 1: Japanese Patent Laid-Open No. 2016-023367

### NON-PATENT LITERATURE

Non-patent literature 1: M. Sigl, S. Lutzmann, M.F. Zaeh, "Transient Physical Effects in Electron Beam Sintering," iwb Institute for Machine Tools and Industrial Management, Technische Universitaet Muenchen, September 14, 2006 Germany

### SUMMARY OF THE INVENTION

### TECHNICAL PROBLEM

In electron-beam lamination-shaping as described above, pre-sintering of a metal powder is performed as a measure against charge-up. The temperature of this pre-sintering is desirably as low as possible, because the higher the sintering temperature, the longer the sintering time and the longer the cooling time after the completion of lamination-shaping. In addition, as the sintering temperature rises, bonding between metal particles becomes strong, and this makes the removal of an unnecessary power after lamination-shaping difficult.

Unfortunately, the techniques described in the abovementioned literatures do not take account of a contrivance for decreasing the pre-sintering temperature, particularly, a contrivance for the metal powder.

The present invention enables to provide a technique of solving the above-described problem.

### SOLUTION TO PROBLEM

One aspect of the present invention provides a metal powder for lamination-shaping a surface of which has a conductive material coated.

Another aspect of the present invention provides a method of manufacturing a metal powder for use in metal lamination-shaping, the method comprising coating a surface of a powder of a nickel-based alloy with nickel as a conductive material.

### ADVANTAGEOUS EFFECTS OF INVENTION

The present invention can decrease a pre-sintering temperature by using a processed metal powder, thereby shortening a lamination-shaping time and facilitating the removal of an unnecessary powder after lamination-shaping.

### BRIEF DESCRIPTION OF DRAWINGS

Fig. 1 is a view showing the results of measurement of nickel with which a powder of a nickel-based alloy is plated, in Example 1 according to the present invention;
Fig. 2 is a view showing the results of measurement of nickel with which a powder of a nickel-based alloy is plated, in Example 2 according to the present invention;
Fig. 3 is a view showing the results of measurement of nickel with which a powder of a nickel-based alloy is plated, in Example 3 according to the present invention;
Fig. 4A is a view showing a method of measuring a resistance characteristic indicating the conductivity of a metal powder;
Fig. 4B is a view showing the method of measuring a resistance characteristic indicating the conductivity of a metal powder;
Fig. 5 is a view showing the measurement results of the resistance values of the metal powders of the examples and a comparative example; and
Fig. 6 is a view showing the measurement results of the resistivities of the metal powders of the examples and comparative example.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### <Powder of This Example embodiment>

A powder to be used in this example embodiment is an alloy powder of nickel-based alloy Inconel 718 (registered trademark: Inconel 718/UNS Number N07718), which is used as a material of a metal lamination-shaped object, particularly, a jet engine and rocket part.

The particle diameter range of the abovementioned alloy powder is preferably 10 to 200 µm, more preferably 25 to 150 µm, and further preferably 45 to 105 µm. The smaller the powder particle diameter, the smaller the surface roughness of a lamination-shaped object, and the higher the accuracy. However, if the powder particle diameter is too small, plating becomes difficult to be performed, and charge-up may occur even when plating is performed. On the other hand, if the powder particle diameter is too large, plating is easy to be performed, but the surface roughens after lamination-shaping increases.

Note that the powder to which this example embodiment is applied may also be another metal alloy containing nickel as a main component. The powder also includes another nickel-containing metal alloy, e.g., a metal alloy containing cobalt or iron as a main component. Note that when the powder is another nickel-containing metal alloy, it is only necessary that the total of the nickel plating amount and the nickel content of the metal powder, which is the component value of nickel contained in the powder, satisfies a prescribed value.

### <Metal Powder used for Lamination-shaping of This Example embodiment>

In electron beam lamination-shaping, pre-sintering of a metal powder is performed as a measure against charge-up, and the pre-sintering temperature is desirably as low as possible, because the higher the sintering temperature, the longer the sintering time and the longer the cooling time after the completion of lamination-shaping. In addition, as the sintering temperature rises, bonding between metal particles becomes strong, and this makes it difficult that the removal of an unnecessary powder after lamination-shaping.

The pre-sintering temperature as described above can be decreased by increasing the conductivity of the metal powder. This is so because as the conductivity between metal particles increases, the sintering properties when using an electron beam improve, and this facilitates short-time sintering, so the sintering temperature decreases.

In this example embodiment, therefore, a metal powder having improved conductivity and improved sintering properties used for lamination-shaping is manufactured by coating a metal alloy powder with a conductive material.

### (Coating Method Using Conductive Material)

In this example embodiment, a metal alloy powder is coated with a conductive metal as a main component of the alloy powder. When the alloy powder is a nickel-based alloy, nickel coating is performed.

A plating method is preferably used as the coating method of this example embodiment. However, the present invention is not limited to the plating method. For example, a hybridization-coating method may also be used.

Note that the conductive material for coating is not limited to the main component of the alloy powder. For example, a nickel-containing alloy containing cobalt or iron as a main component may also be coated with nickel as described above. Furthermore, coating using the conductive material of the alloy powder is not limited to the abovementioned plating method. For example, coating may also be performed by hybridization-coating.

### (Coating Results)

The thickness of the conductive material used in coating performed by plating or the hybridization-coating method and the nickel thickness range of this example embodiment are preferably 0.1 to 1 µm, and more preferably 0.3 µm or more. If the coating thickness is less than 0.1 µm, coating cannot evenly be performed, so the resistance does not decrease. If the thickness exceeds 1 µm, the decrease in resistance by the plating effect remains unchanged.

### (Improvement of Conductivity and Decrease in Sintering Temperature)

The electrical resistance value/electrical resistivity of the metal powder coated with the conductive material of this example embodiment have decreased in comparison to that of an uncoated alloy powder. This indicates that the conductivity of the metal powder of this example embodiment improves, so the sintering temperature can be decreased.

Also, in a smoke test, the metal powder coated with the conductive material of this example embodiment has decreased the lower limit of a smoke start temperature on lamination-shaping, if compared to an uncoated alloy powder. More specifically, the lower-limiting temperature was less than 400°C when using the metal powder of this example embodiment, but exceeded 950°C when using an uncoated alloy powder.

Accordingly, it was possible to decrease the sintering temperature from 1,150°C to 600°C

### <Effects of This Example embodiment>

According to this example embodiment, the following effects can be expected by modifying the surface of the conductive material.

That is, the pre-sintering temperature can be decreased. For example, when performing surface modification on the Inconel 718 powder by using nickel, it was possible to decrease a normal sintering temperature from 1,150°C to 600°C.

Also, the productivity of the lamination-shaping improved because the overall lamination-shaping time was shortened by decreasing pre-sintering temperature. In addition, by decreasing in pre-sintering temperature, it has become easy to remove an unnecessary powder after lamination-shaping. Examples

Examples 1 to 4 according to this example embodiment and Comparative Example 1 will be explained below.

### <Surface Modification Method>

As the surface modification method of coating the surface of an alloy powder, a plating method and deposition processing method of the conductive material were used.

### (Plating Apparatus)

"Flow-Thru Plater RP-1" made by Uyemura Co., Ltd. was used in coating by the plating method.

### (Surface Processing)

"Hybridization System Model NHS-O" made by NARA MACHINERY CO., Ltd. was used in coating by the deposition processing method.

Table 1 shows the coating generation conditions in Examples 1 to 4.

### [Table 1]

**Table 1: Metal Powder Coating Conditions**

| | Sample ID | | | Conditions | | | | |
|---|---|---|---|---|---|---|---|---|
| | | Apparatus used | Processing method | Powder supply amount | Current value | Rotational speed | Processing time | Ni amount |
| Example 1 | Lot 618401-1 | UYEMURA RP-1 | Plating | 1 kg | 20 A | 360 rpm | 1 hr 19 min | 53.5 |
| Example 2 | Lot 618401-2 | UYEMURA RP-1 | Plating | 1 kg | 20 A | 360 rpm | 2 hrs 40 min | 54.0 |
| Example 3 | Lot 618401-3 | UYEMURA RP-1 | Plating | 1 kg | 20 A | 360 rpm | 3 hrs 14 min | 54.2 |
| Example 4 | | NARA MACHINERY NHS-1 | Hybridization-coating | 1 kg | 25 A | 4800 rpm | 3 min | 54.0 |
| Comparative Example 1 | Lot 506341 | Not processed | None | | | | | 52.8 |

### <Surface Modification Results>

The alloy powder and surface modification state were observed with an SEM (Scanning Electron Microscope) and field emission-SEM.

Table 2 shows the coating thickness measurement results in Examples 1 to 3.

### [Table 2]

**Table 2: Plating Layer Thickness Measurement Results [µm]**

| Sample ID | Position No. | Plating layer thickness | |
|---|---|---|---|
| | | Length | [µ nit] |
| Lot 618401-1 | 11 | 0.21 | µm |
| | 12 | 0.23 | µm |
| | 13 | 0.17 | µm |
| | 14 | 0.14 | µm |
| | 15 | 0.21 | µm |
| | 16 | 0.25 | µm |
| Lot 618401-2 | 21 | 0.36 | µm |
| | 22 | 0.41 | µm |
| | 23 | 0.36 | µm |
| | 24 | 0.37 | µm |
| | 25 | 0.33 | µm |
| Lot 618401-3 | 31 | 2.08 | µm |
| | 32 | 1.92 | µm |
| | 33 | 1.60 | µm |
| | 34 | 1.43 | µm |
| | 35 | 1.60 | µm |

### <Measurement of Conductivity (Resistance Specified)>

The conductivities of the alloy powder and the metal powder of this example for lamination-shaping were observed by measuring the electrical resistance value/electrical resistivity.

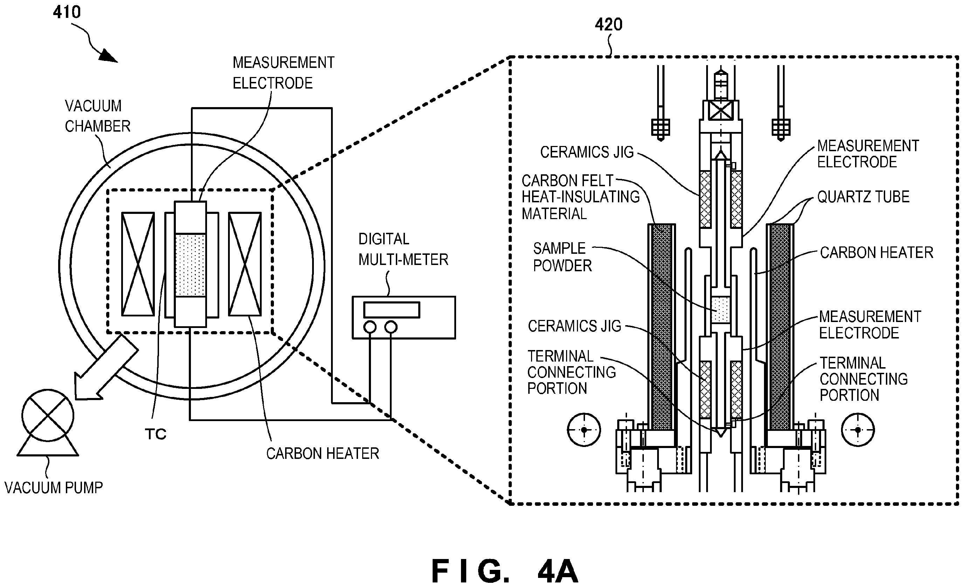

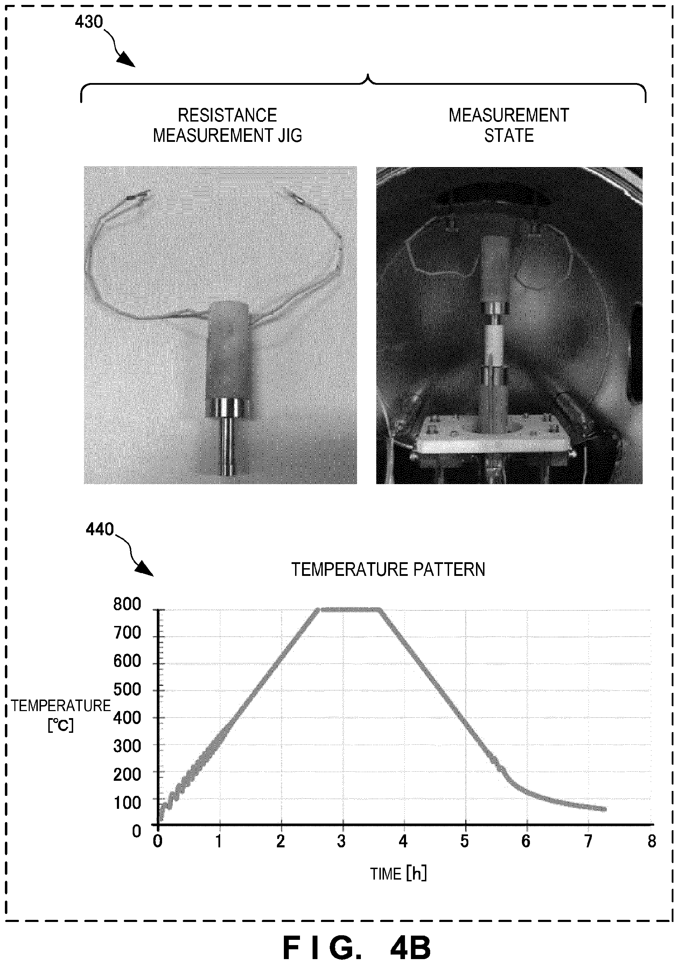

Figs. 4A and 4B show apparatuses 410/420 and measurement methods 430/440 used in the electrical resistance value/electrical resistivity measurements.

### <Measurement Conditions>

Load: constant at 172 g (the weight of a jig)
Temperature: the temperature was changed in accordance with the temperature pattern 440 in Fig. 4B
Atmosphere pressure: less than 0.01 Pa
Powder-filled cylinder inner diameter: φ10 mm
Powder height: aimed at 10 mm

### <Temperature Pattern 440>

(1) Start from room temperature
(2) Heat to 800°C (heating rate = 5°C/min)
(3) Hold at 800°C for 1 hour
(4) Cool to room temperature (cooling rate = 5°C/min)
]

Table 3 shows the electrical resistance value/electrical resistivity measurement results in Examples 1 to 4 and Comparative Example 1.

### [Table 3]

**Table 3: Powder Resistivity [Ω·m] Measurement Results Under Temperature Change Pattern**

| | Sample ID | Powder resistivity [Ω·m] | | | | |
|---|---|---|---|---|---|---|
| | | 300°C | 400°C | 500°C | 600°C | 700°C |
| Example 1 | Lot 618401-1 | 3.97E-04 | 2.61E-04 | 5.27E-05 | 5.98E-05 | 6.26E-05 |
| Example 2 | Lot 618401-2 | 7.93E-04 | 9.03E-05 | 5.41E-05 | 5.18E-05 | 5.13E-05 |
| Example 3 | Lot 618401-3 | 9.38E-05 | 6.89E-05 | 3.96E-05 | 3.52E-05 | 3.86E-05 |
| Example 4 | | 9.69E-02 | 3.52E-03 | 9.55E-04 | 4.48E-04 | 2.44E-04 |
| Comparative Example 1 | Lot 506341 | 1.43E+00 | 3.25E-03 | 1.27E-04 | 1.78E-04 | 2.07E-04 |

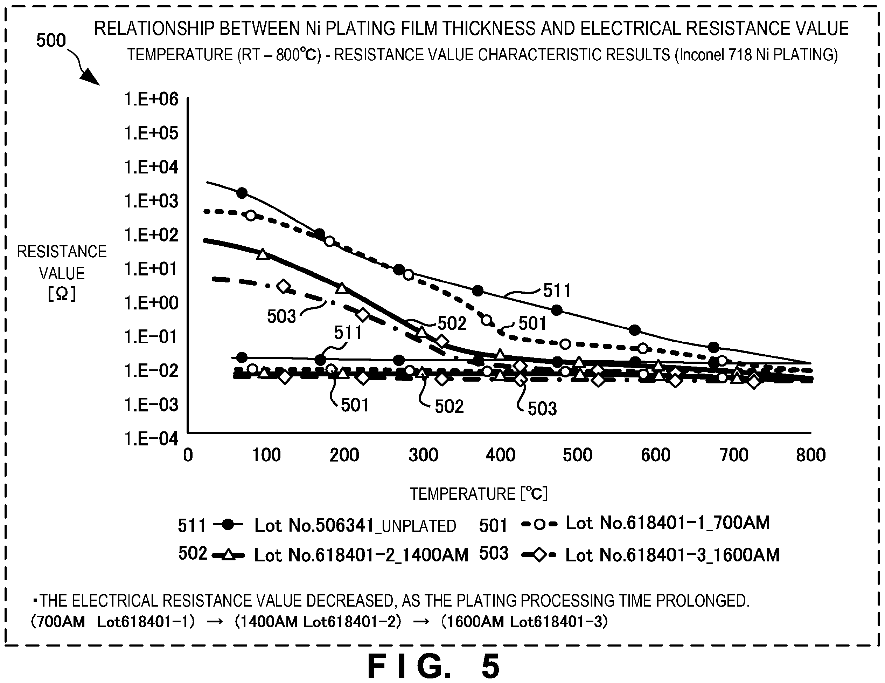

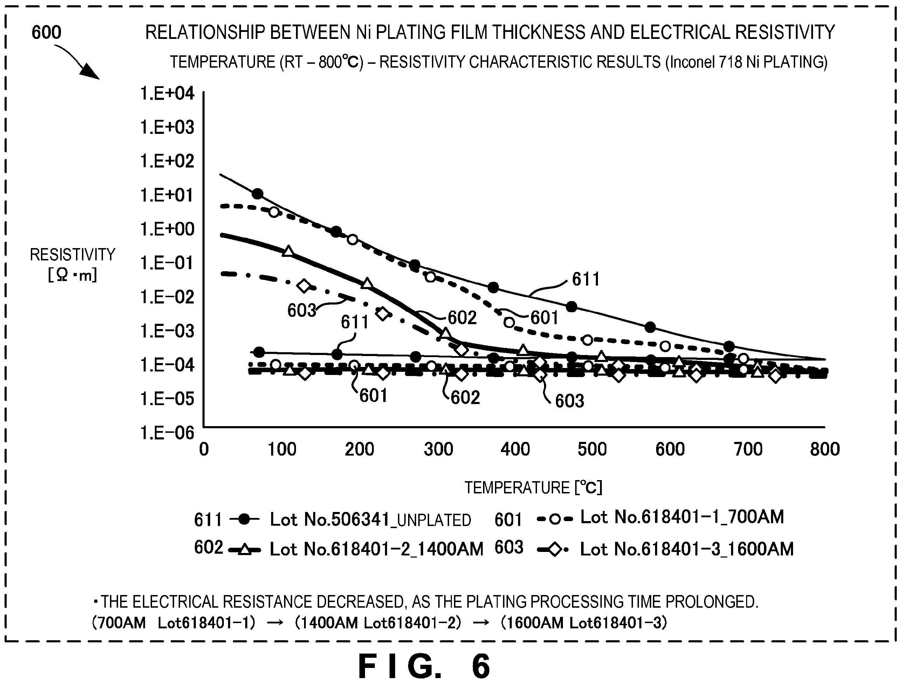

Also, Figs. 5 and 6 are views showing the electrical resistance value/electrical resistivity measurement results in Examples 1 to 3 and Comparative Example 1.

### (Example 1)

A powder of a nickel-based alloy was coated with nickel by using "Flow-Thru Plater RP-1" made by Uyemura Co., Ltd. under the coating conditions of Example 1 shown in Table 1, thereby producing a metal powder for lamination-shaping.

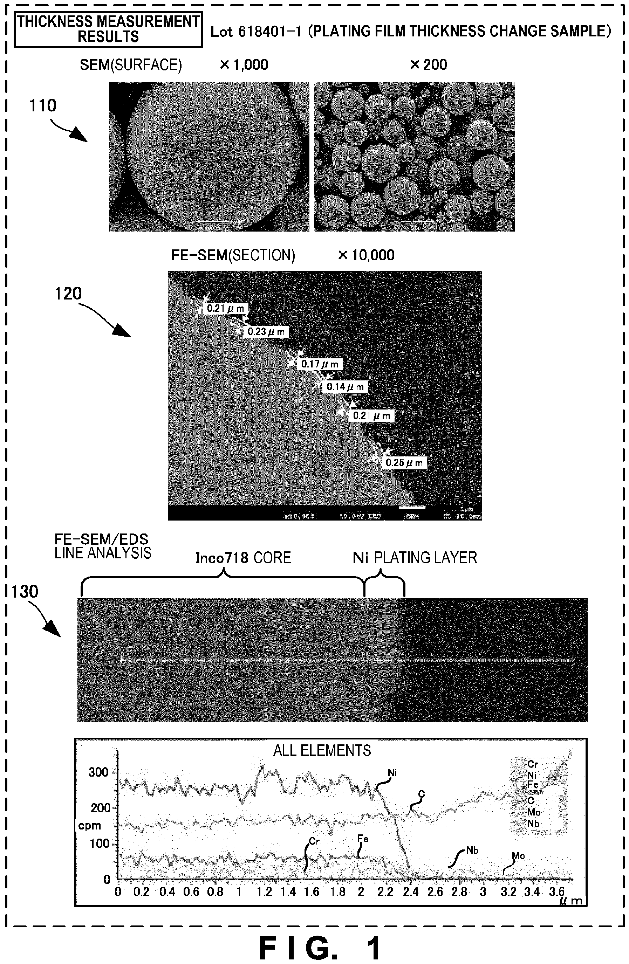

Fig. 1 shows a scanning electron microscopic image (SEM image) of the produced metal powder of Example 1 (sample ID: Lot 618401-1). An SEM image 110 in Fig. 1 is the whole image of the metal powder. An SEM image 120 in Fig. 1 is a surface sectional image of the metal powder. An SEM image 130 in Fig. 1 includes a more detailed surface sectional image of the metal powder, and the contained element amounts in the sectional position. Example 1 in Table 2 shows the nickel film thickness measured based on the SEM image 120.

Example 1 in Table 3 and a line 601 in Fig. 6 show the electrical resistivity obtained by measuring the metal powder of Example 1 (sample ID: Lot 618401-1) by the apparatuses shown in Figs. 4A and 4B, and a line 501 in Fig. 5 shows the electrical resistance value. On the line 601 in Fig. 6 and the line 501 in Fig. 5, the electrical resistivity/electrical resistance value decrease with a temperature rise from room temperature to 800°C, and do not change with a temperature drop from 800°C to room temperature, in accordance with the temperature pattern 440.

### (Example 2)

A powder of a nickel-based alloy was coated with nickel by using "Flow-Thru Plater RP-1" made by Uyemura Co., Ltd. under the coating conditions of Example 2 shown in Table 1, thereby producing a metal powder for lamination-shaping.

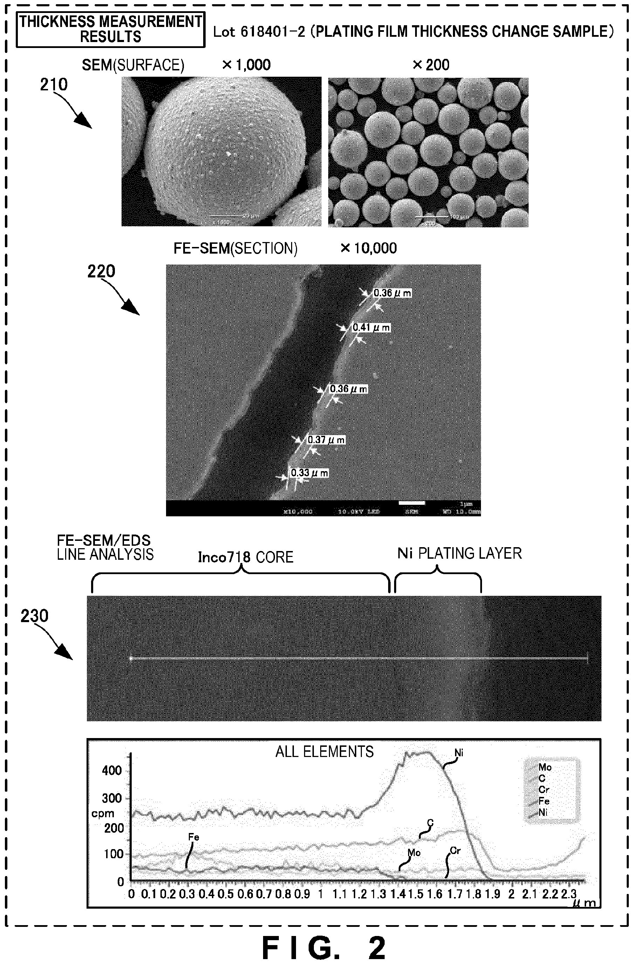

Fig. 2 shows a scanning electron microscopic image of the produced metal powder of Example 2 (sample ID: Lot 618401-2). An SEM image 210 in Fig. 2 is the whole image of the metal powder. An SEM image 220 in Fig. 2 is a surface sectional image of the metal powder. An SEM image 230 in Fig. 2 includes a more detailed surface sectional image of the metal powder, and the contained element amounts in the sectional position. Example 2 in Table 2 shows the nickel film thickness measured based on the SEM image 220.

Example 2 in Table 3 and a line 602 in Fig. 6 show the electrical resistivity obtained by measuring the metal powder of Example 2 (sample ID: Lot 618401-2) by the apparatuses shown in Figs. 4A and 4B, and a line 502 in Fig. 5 shows the electrical resistance value. On the line 602 in Fig. 6 and the line 502 in Fig. 5, the electrical resistivity/electrical resistance value decrease with a temperature rise from room temperature to 800°C, and do not change with a temperature drop from 800°C to room temperature, in accordance with the temperature pattern 440.

### (Example 3)

A powder of a nickel-based alloy was coated with nickel by using "Flow-Thru Plater RP-1" made by Uyemura Co., Ltd. under the coating conditions of Example 3 shown in Table 1, thereby producing a metal powder for lamination-shaping.

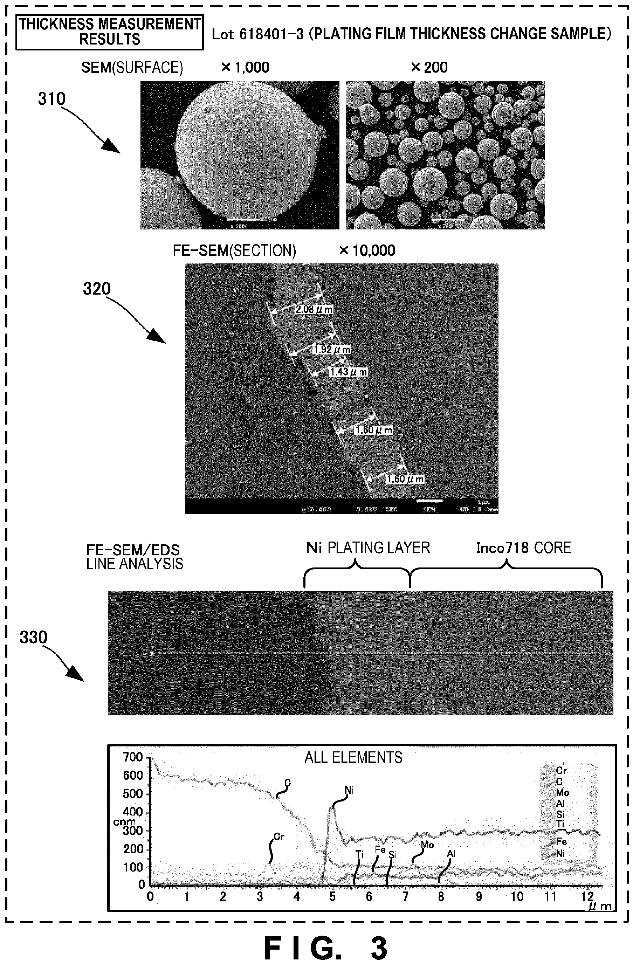

Fig. 3 shows a scanning electron microscopic image of the produced metal powder of Example 3 (sample ID: Lot 618401-3). An SEM image 310 in Fig. 3 is the whole image of the metal powder. An SEM image 320 in Fig. 3 is a surface sectional image of the metal powder. An SEM image 330 in Fig. 3 includes a more detailed surface sectional image of the metal powder, and the contained element amounts in the sectional position. Example 3 in Table 2 shows the nickel film thickness measured based on the SEM image 320.

Example 3 in Table 3 and a line 603 in Fig. 6 show the electrical resistivity obtained by measuring the metal powder of Example 3 (sample ID: Lot 618401-3) by the apparatuses shown in Figs. 4A and 4B, and a line 503 in Fig. 5 shows the electrical resistance value. On the line 603 in Fig. 6 and the line 503 in Fig. 5, the electrical resistivity/electrical resistance value decrease with a temperature rise from room temperature to 800°C, and do not change with a temperature drop from 800°C to room temperature, in accordance with the temperature pattern 440.

### (Example 4)

Nickel was deposited on a powder of a nickel-based alloy by using "Hybridization System Model NHS-1" made by NARA MACHINERY CO., Ltd. under the coating conditions of Example 4 shown in Table 1, thereby producing a metal powder for lamination-shaping.

Example 4 in Table 3 shows the electrical resistivity obtained by measuring this metal powder of Example 4 (sample ID: Lot 506341) by the apparatuses shown in Figs. 4A and 4B.

### (Comparative Example 1)

Comparative Example 1 in Table 3 and a line 611 in Fig. 6 show the electrical resistivity obtained by measuring a nickel-based alloy powder of comparative Example 1 (sample ID: Lot 506341) not coated with nickel by the apparatuses shown in Figs. 4A and 4B, and a line 511 in Fig. 5 shows the electrical resistance value. On the line 611 in Fig. 6 and the line 511 in Fig. 5, the electrical resistivity/electrical resistance value decrease with a temperature rise from room temperature to 800°C, and do not change with a temperature drop from 800°C to room temperature, in accordance with the temperature pattern 440.

### <Decrease in Electrical Resistance/Electrical Resistivity>

Table 3, Figs. 5 and 6 reveal that the electrical resistance/electrical resistivity decrease, as the plating processing time prolongs and the nickel film thickness increases.

### <Smoke Test>

A smoke test was conducted on a nickel-plated nickel-based alloy and a nickel-based alloy not plated with nickel, in accordance with the baseplate temperature.

Table 4 shows the results of this smoke test.

### [Table 4]

**Table 4: Smoke Test (Inconel 718 Plated or Not Plated with Ni)**

| Performed items and results | | | |
|---|---|---|---|
| Run No. | Surface Modification | Temperature/°C | Result |
| Run 01 | Ni Plated | 750 | Stable |
| Run 03 | Ni Plated | 650 | Stable |
| Run 04 | Ni Plated | 550 | Stable |
| Run 06 | Ni Plated | 450 | Stable |
| Run 07 | Ni Plated | 350 | Smoke |
| Run 05 | Ni Plated | 250 | Smoke |
| Run 02 | Ni Plated | RT | Smoke |
| Run 09 | Nothing (Raw Powder) | 1050 | Stable |
| Run 10 | Nothing (Raw Powder) | 950 | Smoke |
| Run 08 | Nothing (Raw Powder) | 750 | Smoke |

| | | | |
|---|---|---|---|
| ① Ni-plated powders smoked at a baseplate temperature of 350°C. ② Unmodified powders smoked at 950°C. ③ Ni-plated powder (Inconel made by FUKUDA METAL FOIL & POWDER CO., LTD.) did not smoke even at RT, but Ni-plated powder (Inconel made by A&R CAMBRIDGE LTD.) smoked at 350°C. ④ In this test, the smoke properties of the reference powder and plated powder were tested, and Ni plating exhibited a smoke suppressing effect. | | | |

From the results of the smoke test shown in Table 4,
(1) Ni-plated powders smoked at a baseplate temperature of 350°C.
(2) Unmodified powders smoked at 950°C.
(3) Ni-plated powder (Inconel made by FUKUDA METAL FOIL & POWDER CO., LTD.) did not smoke even at RT (Room Temperature), but Ni-plated powder (Inconel made by A&R CAMBRIDGE LTD.) smoked at 350°C.
(4) In this test, the smoke properties of the reference powder and plated powder were tested, and Ni plating exhibited a smoke suppressing effect.

### [Other Example embodiments]

In the above examples, nickel-based alloy Inconel 718 (registered trademark: Inconel 718/UNS Number N07718) was used as the alloy powder, but the alloy powder was not limited to Inconel 718.

Table 5 shows examples of other alloy powders to which the present invention is applicable. The other alloy powders include other nickel-based alloys, and other metal-based alloys containing nickel at predetermined ratios, e.g., a cobalt-based alloy and iron-based alloy.

### [Table 5]

**Table 5: Alloy Powder Types**

| Alloy powder type | | Mass (specific gravity) Kg/mm/m | Chemical components (%) | | | | | | | | | | | | |
|---|---|---|---|---|---|---|---|---|---|---|---|---|---|---|---|
| UNS Number | Product name | | Ni | Co | Cr | Mo | W | Fe | C | Mn | Si | Al | Ti | Nb+Ta | Others |
| N06230 | Haynes Alloy No.230 | 8.97 | Residue | <5 | 22 | 2 | 14 | <3 | 0.1 | 0.5 | 0.5 | 0.3 | - | - | La |
| N06002 | Hastelloy X | 8.23 | Residue | 1.5 | 22 | 9 | 0.6 | 18 | 0.1 | <1 | <1 | - | - | - | |
| N06600 | Inconel 600 | 8.43 | Residue | - | 15.5 | - | - | 7 | <0.1 | <1 | <0.5 | - | - | - | |
| N06601 | Inconel 601 | 8.08 | Residue | - | 23 | - | - | 14 | <0.1 | <1 | <0.5 | 0.35 | - | - | |
| N06625 | Inconel 625 | 8.44 | Residue | - | 21.5 | 9 | - | 2.5 | <0.1 | <0.5 | <0.5 | <0.4 | <0.4 | 3.7 | |
| N06690 | Inconel 690 | 8.14 | Residue | - | 30 | - | - | 9.5 | 0.03 | 0.25 | 0.2 | - | - | - | |
| N07706 | Inconel 706 | 8.08 | Residue | - | 16 | - | - | 37 | <0.06 | <0.35 | <0.35 | <0.4 | 1.8 | 2.9 | |
| N07718 | Inconel 718 | 8.22 | Residue | - | 19 | 3 | - | 19 | <0.1 | <0.5 | <0.75 | 0.5 | 0.9 | 5.1 | |
| N07750 | Inconel X-750 | 8.3 | Residue | - | 15 | - | - | 7 | <0.08 | <1 | <1 | 0.7 | 2.5 | 1 | |
| N07751 | Inconel X-751 | 8.25 | Residue | - | 15 | - | - | 7 | 0.04 | <1 | <0.5 | 1.2 | 2 | 1 | |
| N07080 | Nimonic 80A | 8.16 | Residue | - | 19.5 | - | - | <5 | <0.1 | <1 | <1 | 1.1 | 2.2 | - | |
| N07090 | Nimonic 90 | 8.19 | Residue | 16.5 | 19.5 | - | - | - | 0.07 | 0.3 | 0.3 | 1.5 | 2.5 | - | |
| N70263 | Nimonic 263 | 8.36 | Residue | 20 | 20 | 5.9 | - | <0.7 | 0.06 | <0.6 | <0.4 | 0.5 | 2.1 | - | |
| R30605 | Hayness Alloy No.25 | 9.13 | 10 | Residue | 20 | - | 15 | 1.5 | 0.1 | 1.5 | <1 | - | - | - | |
| R30188 | Haynes Alloy No.188 | 9.13 | 22 | Residue | 22 | - | 14.5 | <3 | 0.1 | <1.25 | 0.35 | - | - | - | La |
| N08800 | Incoloy 800 | 8.02 | 32.5 | - | 21 | - | - | Residue | <0.1 | <1.5 | <1 | 0.37 | 0.38 | - | |
| N08810/08811 | Incoloy 800H | 8.02 | 32.5 | - | 21 | - | - | Residue | 0.07 | <1.5 | <1 | 0.37 | 0.38 | - | |
| N09901 | Incoloy 901 | - | 42.5 | - | 12.5 | 5.7 | - | Residue | 0.05 | 0.1 | 0.1 | 0.2 | 2.8 | - | |

## Claims

1. A metal powder used for lamination-shaping a surface of which has a conductive material coated.

2. The metal powder according to claim 1, wherein the surface of the metal powder has the conductive material plated.

3. The metal powder according to claim 1 or 2, wherein the conductive material is a same metal as a main component contained in the metal powder.

4. The metal powder according to claim 3, wherein the main component is a nickel-based alloy, and the conductive material is nickel.

5. The metal powder according to claim 4, wherein the nickel-based alloy is an alloy containing nickel as a main component, and chromium and iron as primary subcomponents.

6. The metal powder according to any one of claims 1 to 5, wherein a particle diameter range of a powder of the nickel-based alloy is 10 to 200 µm, and a thickness range of the conductive material is 0.1 to 1 µm.

7. The metal powder according to claim 6, wherein the particle diameter range of the powder of the nickel-based alloy is preferably 25 to 150 µm, and more preferably 45 to 105 µm.

8. The metal powder according to claim 6 or 7, wherein the thickness range of the conductive material is preferably not less than 0.3 µm.

9. A method of manufacturing a metal powder for use in metal lamination-shaping, the method comprising coating a surface of a powder of a nickel-based alloy with nickel as a conductive material.

10. The method according to claim 9, wherein the coating is performed by plating.

11. The method according to claim 9 or 10, wherein
a particle diameter range of a powder of the nickel-based alloy is 10 to 200 µm, and
in the coating step, a nickel is coated such that a thickness range of nickel is 0.1 to 1 µm.

12. The method according to claim 11, wherein the particle diameter range of the powder of the nickel-based alloy is preferably 25 to 150 µm, and more preferably 45 to 105 µm.

13. The method according to claim 11 or 12, wherein, in the coating step, a nickel is coated such that the thickness range of nickel is not less than 0.3 µm.
